# EUROPEAN PATENT SPECIFICATION

(11) **EP 2 574 110 B1**
(45) Date of publication and mention of the grant of the patent: **22.11.2017**
(21) Application number: 11811728.2
(22) Date of filing: 21.01.2011
(51) Int. Cl.: H04W 48/10, H04W 24/02, H04B 7/26, H04W 84/04

(54) **METHOD AND SYSTEM FOR NETWORK ACCESSING OF RELAY NODE**
VERFAHREN UND SYSTEM FÜR NETZWERKZUGANG EINES RELAISKNOTEN
PROCÉDÉ ET SYSTÈME PERMETTANT L'ACCÈS AU RÉSEAU D'UN NOEUD RELAIS

(30) Priority: 30.07.2010 CN 201010245446
(43) Date of publication of application: 27.03.2013
(73) Proprietor: ZTE Corporation, Shenzhen, Guangdong 518057 (CN)
(72) Inventor: DENG, Yun, Guangdong 518057 (CN); WANG, Guanzhou, Guangdong 518057 (CN)
(74) Representative: Modiano, Micaela Nadia
(86) International application number: PCT/CN2011/070496
(87) International publication number: WO 2012/013026

(56) References cited:
- CN-A- 101 112 014
- CN-A- 101 494 851
- CN-A- 101 651 950
- US-A1- 2009 197 624
- VODAFONE ET AL: "Initial Attachment of RN-UE", 3GPP DRAFT; R3-101903, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453814, [retrieved on 2010-06-23]
- HUAWEI: "Some Issues Concerning RN startup", 3GPP DRAFT; R2-102974, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 1 May 2010 (2010-05-01), XP050422900, [retrieved on 2010-05-01]
- ERICSSON: "RN attach and authorization", 3GPP DRAFT; R3-101893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Beijing; 20100629, 23 June 2010 (2010-06-23), XP050453804, [retrieved on 2010-06-23]

## Description

### TECHNICAL FIELD

The disclosure relates to the field of mobile communications, in particular to a method and a system for implementing network attach of a Relay Node (RN).

### BACKGROUND

The Long Term Evolution (LTE) system in the 3rd generation mobile communications consists of an Evolved Universal Terrestrial Radio Access Network (E-UTRAN), a User Equipment (UE), and an Evolved Packet Core (EPC) network. The E-UTRAN is composed of an Enhanced NodeB (eNB) of network elements of an access network. The eNB is connected with the UE by a Uu interface and with a network element of a core network, such as Mobility Management Entity (MME), by an S1 interface.

To meet the increasing demand of large-bandwidth high-speed mobile access, the Third Generation Partnership Projects (3GPP) releases the Long-Term Evolution Advance (LTE-Advanced) standard, which reserves the core of LTE, and as an evolution of LTE system, expands the frequency domain and spatial domain by a series of technologies in order to improve the spectrum utilization rate and increase the system capacity, etc. As one of the LTE-Advanced technologies, the radio relay technology aims to extend the coverage of cell, reduce unreachable area in communications, balance load, transfer the service of hotspot area and save the transmission power of UE.

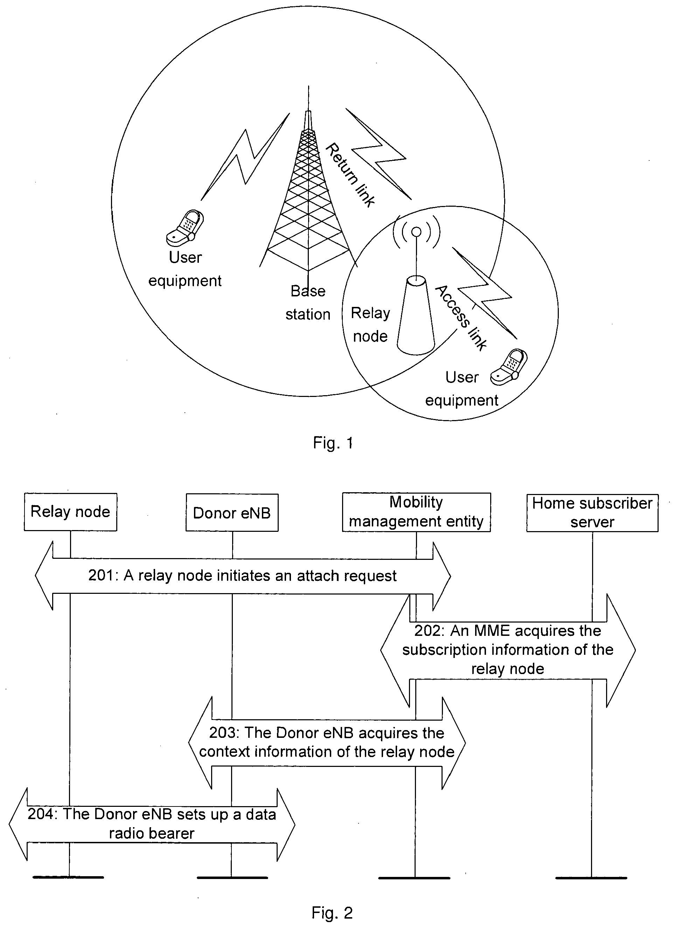

As shown in Fig. 1, the RN is connected with the UE by a Uu interface to provide the functions of base station, and also connected with a base station by a Un interface to provide the function of UE. The base station connected with the RN is called a Donor eNodeB (DeNB), which is connected by an S1 interface with a network element of core network such as MME, and the RN is connected with a network element of core network such as MME by the DeNB proxy, so as to realize the relay function of data transmission between the RN and base station, and between the RN and the UE managed by the RN, and achieve the aims of extending the coverage of cell, reducing unreachable area in communications, balancing load, transferring the service of hotspot area, saving the transmission power of UE, etc.

To realize the relay function, after attaching the cell administrated by the DeNB and setting up a Radio Resource Control (RRC) connection, the RN needs to set up a Data Radio Bearer (DRB), which is used for downloading necessary parameters, such as configuration information of the cell administrated by the Relay and the like information, from an Operation & Maintenance (O&M) server, and transmitting signaling of S1 and X2 interfaces and data of UE in the cell administrated by the RN, etc. The complete flow of setting up the DRB by the RN during initial attach is as shown in Fig. 2:
Step 201: After setting up an RRC connection with the DeNB, the RN performs signaling exchange at a Non Access Stratum (NAS) with the MME selected by the DeNB, so as to complete acquisition of identification information, authentication and security setup.

Here, the NAS signaling is an attach request from the RN.

Step 202: The MME implements information exchange with other network elements of the core network, for example, acquiring subscription information of the RN from a Home Subscriber Server (HSS).

Step 203: The MME implements exchange of S1 signaling with the DeNB, so that the DeNB acquires that it is an RN attaching the DeNB, and acquires the context information of the RN, such as a parameter of the E-UTRAN Radio Access Bearer (E-RAB) to be set up by the RN, security key, UE security capabilities which here refer in particular to the security capabilities of the RN, and the like.

Step 204: The DeNB sets up a DRB for the RN.

To make the RN attach a proper DeNB and MME in Step 201, it is proposed to select the DeNB and MME in a pre-configuration way according to the related art, which requires the network operator to select a DeNB list to be attached and the corresponding MME for the RN in advance, and pre-write the selected information into an RN device; and after the RN is initially powered on, the DeNB is selected according to the pre-configured information, meanwhile, the MME identification information is provided to the DeNB such that the DeNB can select a proper MME.

However, the parameters of network (such as identifier and load of DeNB, or load of MME) may change, and the deployment site of the RN may also change, therefore, the RN probably cannot attach a network to work normally in this pre-configuration way, particularly when needing to be deployed as soon as possible in case of emergency (such as earthquake disaster), the RN cannot attach the network to provide the coverage service in the pre-configuration way.

The 3GPP TSG-RAN WG3 contribution entitled "Initial Attachment of RN-UE", by Vodafone, Motorola and Alcatel-Lucent, describes a method to select, by a DeNB, an MME for an attaching RN, based on information received from the attaching RN-UE indicating that it is an RN, and on the MME's capabilities.

### SUMMARY

The technical problem to be solved by the disclosure is to provide a method and a system for implementing network attach of an RN, in order that the RN can attach a network conveniently and fast to work smoothly.

To solve the problem above, the disclosure provides a method for implementing network attach of an RN, as defined in independent claim 1, and a corresponding system, as defined in independent claim 8.
Preferred embodiments are set out in the dependent claims. In the disclosure, the base station is informed of the indication information of the RN during the RRC connection setup stage by the RN, so that the base station can select a proper MME for the RN; meanwhile, the problem of how to acquire RN type information by the base station is solved. The disclosure makes minor changes to protocol and can make the RN smoothly attach a network to work.

### BRIEF DESCRIPTION OF THE DRAWINGS

Fig. 1 is a diagram showing the structure of a system adopting the radio relay technology in the related art;
Fig. 2 is a flowchart showing the network attach of an RN in the related art;
Fig. 3 is a diagram showing the structure of an attach system according to an aspect of the disclosure; and
Fig. 4 is a flowchart showing the first example of the disclosure.

### DETAILED DESCRIPTION

The concept of the disclosure is: an RN carries indication information of the RN in a message to be sent to a DeNB during an initial attach process, and the DeNB selects an MME supporting the RN functionality for the RN according to the indication information of the RN, wherein the indication information of the RN includes RN type information (also called capability information of the RN or hardware capability information of the RN), or information on whether the RN dedicated parameter is to be configured.

The initial attach process here refers to the process of setting up the RRC connection between the RN and the DeNB.

Since the RN voluntarily sends indication information of the RN to the DeNB, the DeNB can directly select the MME supporting the RN functionality for the RN according to the information, rather than being limited to the pre-configuration in the related art, thus the disclosure is more convenient and flexible than the related art, and can ensure fast network attach of the RN.

Preferably, the RN, before sending the message to the DeNB, selects a cell to be attached according to a pre-configured base station list or cell list or information contained in a cell system broadcast message on whether attach of the RN is allowed, and initiates an initial attach to the DeNB to which the selected cell to be attached belongs.

Preferably, the message carrying the indication information of the RN sent from the RN to the DeNB includes: an RRC connection setup complete message or an RRC connection request message.

The DeNB, after receiving the indication information of the RN, configures RN dedicated parameters for the RN according to the indication information.

After the DeNB selects the MME for the RN, the MME selects a gateway located within the DeNB for the RN, when an authentication of the RN performed by the MME is successful.

In accordance with the hardware capability of the RN, mainly the quantity and isolation degree of an RN radio frequency transceiver, there are different types or capabilities of the RN. If the RN has more than one set of radio frequency transceiver, and the Un interface between the RN and DeNB and the Uu interface between the RN and UE may use different frequencies, such RN is called an outband RN, sometimes also called an RN of type 1a; if the RN only has one set of radio frequency transceiver, the Un interface between the RN and DeNB and the Uu interface between the RN and UE use the same frequency, such RN is called an inband RN, sometimes also called an RN of type 1; due to the different isolation degree of the RN radio frequency transceiver, the inband RN may be divided into an inband RN with resource partitioning and an inband RN without resource partitioning, the inband RN with resource partitioning refers to that the Un interface and the Uu interface need to adopt a time division multiplexing manner, i.e., the links of the Un interface and the Uu interface cannot be in an activated state at the same time.

Preferably, the RN type information includes information indicating that the RN is inband RN or information indicating that the RN is an outband RN. When the RN type information includes the information indicating that the RN is inband RN, the RN type information may further include information indicating that the RN is an inband RN with resource partitioning or information indicating that the RN is an inband RN without resource partitioning.

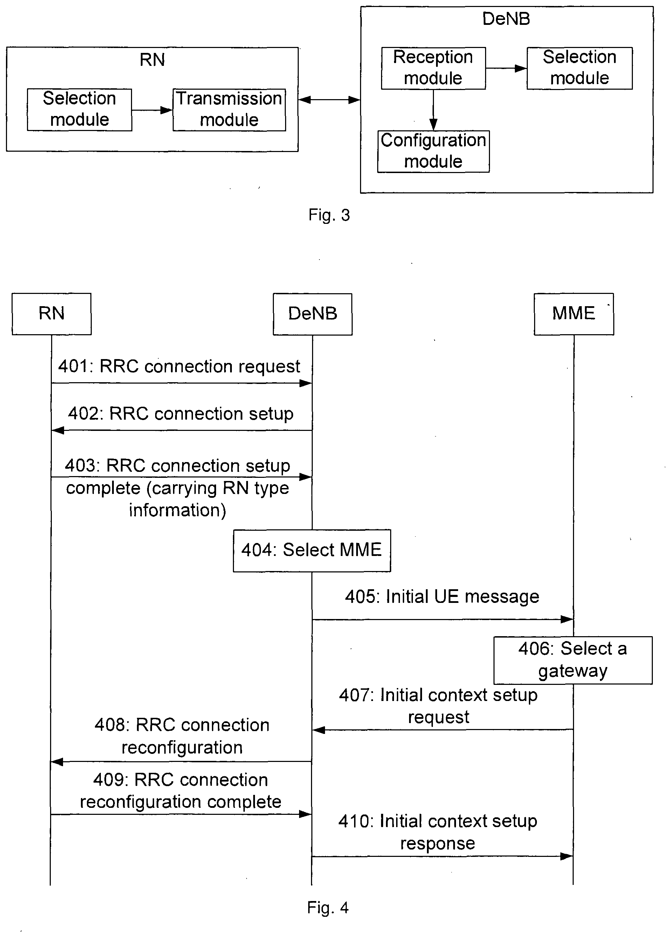

As shown in Fig. 3, a Relay Node (RN) attach system for implementing the method described above includes an RN and a DeNB connecting the RN, wherein
the RN is configured to carry indication information of the RN in the message to be sent to the DeNB during an initial attach process; and
the DeNB is configured to select an MME supporting the RN functionality for the RN according to the indication information of the RN.

Preferably, the RN may include a selection module and a transmission module, wherein
the selection module is configured to select a cell to be attached according to a pre-configured base station list or cell list or according to the information contained in a cell system broadcast message on whether attach of the RN is allowed; and
the transmission module is configured to initiate an initial attach to the DeNB to which the cell selected by the selection module belongs.

Preferably, the DeNB may include a reception module, a selection module and a configuration module, wherein
the reception module is configured to receive the indication information sent from the RN;
the selection module is configured to select the MME supporting the RN functionality for the RN according to the information received by the reception module; and
the configuration module is configured to configure an RN dedicated parameter for the RN according to the information received by the reception module.

Preferably, the indication information of the RN may include RN type information or information on whether the RN dedicated parameter is to be configured.

The disclosure is further described below in conjunction with the drawings and embodiments.

In the following embodiments, the MME not supporting the RN functionality is an MME which cannot make the RN attach the network, or an MME which cannot provide the relay function even it can make the RN attach the network (such as the MME with a low version, or the MME which cannot provide a dedicated authentication and a security mechanism of the RN), or an MME which cannot select a proper gateway for the RN.

### First example

The RN is pre-configured with a list of DeNBs that can be attached or a list of cells that can be attached. The network attach flow of the RN after the RN is initially powered on is as shown in Fig. 4:
Step 401: The RN selects a cell with the best signal quality at a certain frequency point (belonging to the DeNB list or cell list) according to the list of DeNBs or a list of cells that can be attached) to acquire the system information, initiate a random attach, and send an RRC connection request message to the DeNB to which the cell belongs.
Step 402: The DeNB allocates resources for the RN and sends an RRC connection setup message to the RN.
Step 403: The RN, after receiving the RRC connection setup, sends an RRC connection setup complete signaling to the DeNB, wherein the complete signaling contains the RN type information and further contains an NAS signaling (such as attach request) sent from the RN to the core network.

In order to implement the disclosure, it is required to add a cell to the RRC connection setup completion to represent the RN type information, wherein the RN type information includes information indicating that the RN is an inband RN or information indicating that the RN is an outband RN. When the RN type information includes the information indicating that the RN is inband RN, the RN type information may further include information indicating that the RN is an inband RN with resource partitioning or information indicating that the RN is inband RN without resource partitioning.

In one example, the RN may also send the RN type information of the RN to the DeNB in the RRC connection request in Step 401.

Step 404: The DeNB, after receiving the RRC connection setup complete signaling, selects a proper MME for the RN according to the RN type information carried by the DeNB.

If it is a common UE attaching, the DeNB selects a proper MME according to the load of the MME connected with the DeNB and the type of the service initiated by the UE. But when the RN attaches the network, the DeNB needs to select an MME supporting the RN, and the selected MME at least needs to meet the following conditions: 1, the version of the MME is enough to support it to acquire the information informed by the core network that the attach node is an RN; 2, the MME is capable of selecting a proper gateway for the RN, i.e., a gateway located within the DeNB. Generally, when the UE initiates a service, the MME selects a gateway located on the core network (which is unrelated to the base station which the UE attaches) side for the UE, but when selecting for an RN, as the RN needs to provide services for the UEs covered by the RN, if the MME selects the gateway located on the core network side, user data will be transmitted among multiple gateways, causing complex data processing and increase data delay. Therefore, the MME needs to select the gateway located within the DeNB for the RN.

The DeNB saves the RN type information after receiving the information, and applies it to configure parameters for the RN.

Step 405: The DeNB sends an initial UE message to the selected MME, which contains an NAS signaling, such as an attach request.

Step 406: After receiving the initial UE message, the MME performs authentication and security setup of the RN, and further needs to implement information exchange with other network elements in the core network, so as to acquire subscription information of the RN (not shown in the figures) from the Home Subscriber Server (HSS); only when the core network authenticates that it is an RN attaching and notifies the MME of this can the MME identify the RN. In the example, through authentication, the MME confirms that it is an RN attaching and selects a gateway located within the DeNB for the RN, including a Serving Gateway (SGW) and a Packet Data Network (PDN) Gateway.

How to select a proper gateway can be implemented by the prior art.

Step 407: The MME sends an initial context setup request to the DeNB, wherein the initial context setup request contains a parameter of quality of service of the DRB to be set up for the RN by the DeNB, and security configuration parameter, and the like; and the initial context setup request further includes identification information of the RN authenticated and confirmed by the core network, wherein the core network may set a specific parameter, such as Subscriber Profile ID (SPID), to identify the RN.

Step 408: The DeNB, after receiving the initial context setup request, confirms that it is an RN attaching, sets up a DRB configuration parameter for the RN, and sends an RRC connection reconfiguration signaling to the RN.

Having acquired the RN type information in Step 403, the DeNB may configure RN dedicated parameters for the RN in the RRC connection reconfiguration, for example, for an inband RN with resource partitioning, the DeNB configures timeslot information for the transmission of the Un interface (i.e., the interface between the DeNB and the RN).

Step 409: After receiving the RRC connection reconfiguration signaling, the RN sends an RRC connection reconfiguration complete signaling to the DeNB by using the parameter configuration in the signaling.

Step 410: The DeNB, after receiving the RRC connection reconfiguration completion, sends an initial context setup response message to the MME.

As a result, the RN smoothly attaches the network and sets up a DRB with the DeNB. The RN can be connected with an Operation & Maintenance (O&M) server to download necessary parameters from the O&M server, such as configuration information of the cell administrated by the Relay, and will further set up S1 and X2 interfaces with the DeNB based on the set-up Signaling Radio Bearer (SRB) and DRB, so as to provide services for the UEs covered by the RN.

To work normally, the RN needs to attach the proper DeNB and MME, this is mainly because: the DeNB will configure dedicated parameters for the RN (which is different from that for an ordinary UE), and set up a DRB for the RN, which is used for transmitting S1 signaling and the like of the UEs covered by the RN (see Step 408); and the MME also needs to know that it is an RN attaching during the authentication of the RN, and select a proper gateway located within the DeNB for the RN (see Step 406).

### Second example

In the example, the RN has no pre-configured list of DeNBs that can be attached or list of cells that can be attached. The cell system broadcast message contains information on whether attach of the RN is allowed, and the RN can select a cell that can be attached according to the broadcast information.

Step 501: The RN searches for cells in its supported frequency bands, selects a cell which has the strongest signal quality at a frequency point and allows the attach of an RN, reads a system message of the cell, initiates a random attach in the cell, and sends an RRC connection request message to the base station to which the cell belongs, i.e., the DeNB.

Steps 502 and 503 are the same as Steps 402 and 403 in the first example. In the example, the RN type information contained in the RRC connection setup complete signaling sent from the RN to the DeNB in Step 503 shows that the attaching RN is an inband RN without resource partitioning.

Steps 504-510 are similar to Steps 404-410 in the first example, except that in Step 507, the DeNB acquires that the RN is an inband RN without resource partitioning, so the DeNB does not need to configure timeslot information for the transmission of the Un interface for the RN, and in this case, the DeNB can transmit signaling and data with the RN at any timeslot.

The RN smoothly attaches the network and then sets up a DRB with the DeNB. The RN can be connected with the O&M server to download necessary parameters from the O&M server, such as configuration information of the cell administrated by the Relay, and will further set up S1 and X2 interfaces with the DeNB based on the set-up SRB and DRB, so as to provide services for the UEs covered by the RN.

Those skilled in the art shall understand that all or some steps in the method may be finished through instructing a related hardware by a program which can be stored in a computer readable storage medium, such as read-only storage, disk or compact disc. Optionally, all or some steps in the examples can also be implemented by one or more integrated circuits. Correspondingly, each module/unit in the examples can be implemented in the form of hardware or software functional module. The disclosure is not limited to combinations of hardware and software in any specific form.

The above are only examples of the disclosure and not intended to limit the scope of protection of the disclosure, that is defined by the appended claims.

### INDUSTRIAL APPLICABILITY

In the disclosure, the base station is informed of the indication information of the RN during the RRC connection setup stage by the RN, so that the base station can select a proper MME for the RN; meanwhile, the problem of how to acquire RN information by the base station is solved. The disclosure makes minor changes to protocol and can make the RN smoothly attach a network to work.

## Claims

1. A method for implementing network attach of a Relay Node, RN, comprising:
carrying (403), by the RN, indication information of the RN in a message to be sent to a Donor eNodeB, DeNB, during an initial attach process; and
selecting (404) for the RN, by the DeNB, a Mobility Management Entity, MME, supporting the RN functionality according to the indication information of the RN,
**characterized in that**,
the indication information of the RN comprises: RN type information;
the selected MME at least meets the conditions that the version of the MME is enough to support the MME to acquire information, from a core network, that an attach node is an RN; and that
the MME is capable of selecting a gateway located within the DeNB for the RN.

2. The method according to claim 1, further comprising:
before the RN sends the message to the DeNB,
selecting a cell to be attached according to a pre-configured base station list or cell list or according to information contained in a cell system broadcast message on whether attach of the RN is allowed, and initiating an initial attach to the DeNB to which the selected cell to be attached belongs.

3. The method according to claim 1, wherein the message carrying the indication information of the RN sent from the RN to the DeNB comprises: a Radio Resource Control, RRC, connection setup complete message or an RRC connection request message.

4. The method according to claim 1, wherein the selecting for the RN, by the DeNB, an MME supporting the RN functionality according to the indication information of the RN comprises:
configuring for the RN, by the DeNB, an RN dedicated parameter according to the indication information of the RN, after receiving the information.

5. The method according to claim 1, further comprising:
after the DeNB selects the MME for the RN,
selecting for the RN, by the MME, a gateway located within the DeNB, when an authentication of the RN performed by the MME is successful.

6. The method according to claim 1, wherein
the RN type information comprises information indicating that the RN is an inband RN or information indicating that the RN is an outband RN.

7. The method according to claim 6, wherein
when the RN type information comprises the information indicating that the RN is an inband RN, the RN type information further comprises information indicating that the RN is an inband RN with resource partitioning or information indicating that the RN is an inband RN without resource partitioning.

8. A Relay Node, RN, attach system, comprising an RN and a Donor eNodeB, DeNB, connecting the RN, wherein
the RN is configured to carry (403) indication information of the RN in a message to be sent to the DeNB during an initial attach process; and
the DeNB is configured to select (404) a Mobility Management Entity, MME, supporting the RN functionality for the RN according to the indication information of the RN,
**characterized in that**,
the indication information of the RN comprises: RN type information;
the selected MME at least meets the conditions that the version of the MME is enough to support the MME to acquire information, from a core network, that an attach node is an RN; and that the MME is capable of selecting a gateway located within the DeNB for the RN.

9. The system according to claim 8, wherein the RN comprises a selection module and a transmission module, wherein
the selection module is configured to select a cell to be attached according to a pre-configured base station list or cell list or according to information contained in a cell system broadcast message on whether attach of the RN is allowed; and
the transmission module is configured to initiate an initial attach to the DeNB to which the cell selected by the selection module belongs.

10. The system according to claim 8, wherein the DeNB comprises a reception module, a selection module and a configuration module;
the reception module is configured to receive the indication information of the RN sent from the RN;
the selection module is configured to select an MME supporting the RN functionality for the RN according to the information of the RN received by the reception module; and
the configuration module is configured to configure an RN dedicated parameter for the RN according to the indication information of the RN received by the reception module.

## Patentansprüche

1. Ein Verfahren zum Implementieren von Netzwerkanschluss eines Relaisknotens, RN, das Folgendes umfasst:
Tragen (403), durch den RN, von Meldeinformationen des RN in einer Nachricht, die während eines Anfangs-Anschlussverfahrens an einen Donor eNodeB, DeNB, gesendet werden soll; und
Auswählen (404) für den RN, durch den DeNB, einer Mobility Management Entity, MME, die die RN-Funktionalität entsprechend den Meldeinformationen des RN unterstützt,
**dadurch gekennzeichnet, dass**
die Meldeinformationen des RN Folgendes umfassen:
Informationen vom RN-Typ;
die gewählte MME mindestens die Bedingungen erfüllt, dass die Version der MME ausreicht, um die MME zu unterstützen, um Informationen aus einem Kernnetzwerk abzurufen, dass der Anschlussknoten ein RN ist; und dass
die MME in der Lage ist, für den RN ein Gateway auszuwählen, das sich innerhalb des DeNB befindet.

2. Das Verfahren gemäß Anspruch 1, das weiter Folgendes umfasst:
bevor der RN die Nachricht an den DeNB sendet,
Auswählen einer anzuschließenden Zelle entsprechend einer vorkonfigurierten Basisstationsliste oder Zellenliste oder entsprechend Informationen, die in einer Zellensystem-Rundfunknachricht enthalten sind, darüber, ob ein Anschließen des RN erlaubt ist, und Auslösen eines anfänglichen Anschlusses an den DeNB, zu dem die ausgewählte anzuschließende Zelle gehört.

3. Das Verfahren gemäß Anspruch 1, wobei
die Nachricht, die die Meldeinformationen des RN trägt, die vom RN an den DeNB gesendet werden, Folgendes umfasst: eine Radio Resource Control, RRC,-Verbindungsaufbauabschlussnachricht oder eine RRC-Verbindungsanforderungsnachricht.

4. Das Verfahren gemäß Anspruch 1, wobei das Auswählen für den RN, durch den DeNB, einer MME, die die RN-Funktionalität entsprechend den Meldeinformationen des RN unterstützt, Folgendes umfasst:
Konfigurieren für den RN, durch den DeNB, eines RNdedizierten Parameters entsprechend den Meldeinformationen des RN nach Empfangen der Informationen.

5. Das Verfahren gemäß Anspruch 1, das weiter Folgendes umfasst:
nachdem der DeNB die MME für den RN ausgewählt hat,
Auswählen für den RN, durch die MME, eines Gateways, das sich innerhalb der DeNB befindet, wenn eine von der MME durchgeführte Authentifizierung des RN erfolgreich ist.

6. Das Verfahren gemäß Anspruch 1, wobei
die Informationen vom RN-Typ Informationen umfassen, die angeben, dass der RN ein Inband-RN ist, oder Informationen, die angeben, dass der RN ein Außerband-RN ist.

7. Das Verfahren gemäß Anspruch 6, wobei,
wenn die Informationen vom RN-Typ die Informationen umfassen, die angeben, dass der RN ein Inband-RN ist, die Informationen vom RN-Typ weiter Informationen umfassen, die angeben, dass der RN ein Inband-RN mit Ressourcenaufteilung ist, oder Informationen, die angeben, dass der RN ein Inband-RN ohne Ressourcenaufteilung ist.

8. Ein Relaisknoten, RN,-Anschlusssystem, das einen RN und einen Donor eNodeB, DeNB, umfasst, der den RN verbindet,
wobei der RN konfiguriert ist, um Meldeinformationen des RN in einer Nachricht zu tragen (403), die während eines Anfangs-Anschlussverfahrens an den DeNB gesendet werden soll; und
der DeNB konfiguriert ist, um eine Mobility Management Entity, MME, auszuwählen (404), die die RN-Funktionalität für den RN entsprechend den Meldeinformationen des RN unterstützt,
**dadurch gekennzeichnet, dass**
die Meldeinformationen des RN Folgendes umfassen: Informationen vom RN-Typ;
die gewählte MME mindestens die Bedingungen erfüllt, dass die Version der MME ausreicht, um die MME zu unterstützen, um Informationen aus einem Kernnetzwerk abzurufen, dass ein Anschlussknoten ein RN ist; und dass
die MME in der Lage ist, für den RN ein Gateway auszuwählen, das sich innerhalb des DeNB befindet.

9. Das System gemäß Anspruch 8, wobei der RN ein Auswahlmodul und ein Übertragungsmodul umfasst, wobei
das Auswahlmodul konfiguriert ist, um eine anzuschließende Zelle entsprechend einer vorkonfigurierten Basisstationsliste oder Zellenliste oder entsprechend Informationen, die in einer Zellensystem-Rundfunknachricht enthalten sind, darüber, ob ein Anschließen des RN erlaubt ist, auszuwählen; und
das Übertragungsmodul konfiguriert ist, um ein anfängliches Anschließen an den DeNB, zu dem die vom Auswahlmodul ausgewählte Zelle gehört, auszulösen.

10. Das System gemäß Anspruch 8, wobei der DeNB ein Empfangsmodul, ein Auswahlmodul und ein Konfigurationsmodul umfasst;
das Empfangsmodul konfiguriert ist, um die Meldeinformationen des RN, die vom RN gesendet werden, zu empfangen;
das Auswahlmodul konfiguriert ist, um eine MME, die die RN-Funktionalität für den RN unterstützt, entsprechend den Informationen des RN, die vom Empfangsmodul empfangen werden, auszuwählen; und
das Konfigurationsmodul konfiguriert ist, um einen RNdedizierten Parameter für den RN entsprechend den Meldeinformationen des RN, die vom Empfangsmodul empfangen werden, zu konfigurieren.

## Revendications

1. Procédé pour réaliser le rattachement à un réseau d'un noeud de relais, RN, comprenant :
de porter (403), par le RN, une information d'indication du RN dans un message destiné à être envoyé à un noeud B évolué donneur, DeNB, pendant un processus de rattachement initial ; et
de sélectionner (404) pour le RN, par le DeNB, une entité de gestion de mobilité, MME, supportant la fonctionnalité de RN selon l'information d'indication du RN,
**caractérisé en ce que**,
l'information d'indication du RN comprend : une information de type de RN ;
la MME sélectionnée vérifie au moins les conditions que la version de la MME est suffisante pour supporter l'acquisition d'information par la MME, depuis un réseau central, qu'un noeud rattaché est un RN ; et que
la MME peut sélectionner une porte située dans le DeNB pour le RN.

2. Procédé selon la revendication 1, comprenant en outre :
avant que le RN envoie le message au DeNB,
de sélectionner une cellule à rattacher selon une liste de stations de base ou une liste de cellules préconfigurées ou selon une information contenue dans un message de diffusion de système de cellules sur si le rattachement du RN est autorisé, et d'initier un rattachement initial au DeNB auquel la cellule sélectionnée à rattacher appartient.

3. Procédé selon la revendication 1, dans lequel
Le message portant l'information d'indication du RN envoyé depuis le RN au DeNB comprend ; une commande de ressource radio, RRC, un message de fin de réglage de connexion ou un message de requête de connexion RRC.

4. Procédé selon la revendication 1, dans lequel la sélection pour le RN, par le DeNB, d'une MME supportant la fonctionnalité de RN selon l'information d'indication du RN comprend :
de configurer pour le RN, par le DeNB, un paramètre dédié de RN selon l'information d'indication du RN, après réception de l'information.

5. Procédé selon la revendication 1, comprenant en outre :
après que le DeNB sélectionne la MME pour le RN,
de sélectionner pour le RN, par la MME, une porte située dans le DeNB, quand une authentification du RN réalisée par la MME est un succès.

6. Procédé selon la revendication 1, dans lequel
l'information de type de RN comprend une information indiquant que le RN est un RN dans la bande ou une information indiquant que le RN est un RN hors bande.

7. Procédé selon la revendication 6, dans lequel
Quand l'information de type de RN comprend l'information indiquant que le RN est un RN dans la bande, l'information de type de RN comprend en outre une information indiquant que le RN est un RN dans la bande avec partitionnement de ressources ou une information indiquant que le RN est un RN dans la bande sans partitionnement de ressources.

8. Système de rattachement de noeud de relai, RN, comprenant un RN et un noeud B évolué donneur, DeNB, connectant le RN, dans lequel
Le RN est configuré pour porter (403) une information d'indication du RN dans un message à envoyer au DeNB pendant un processus de rattachement initial ; et
Le DeNB est configuré pour sélectionner (404) une entité de gestion de mobilité, MME, supportant la fonctionnalité de RN selon l'information d'indication du RN,
**caractérisé en ce que**,
l'information d'indication du RN comprend : une information de type de RN ;
la MME sélectionnée vérifie au moins les conditions que la version de la MME est suffisante pour supporter l'acquisition d'information par la MME, depuis un réseau central, qu'un noeud rattaché est un RN ; et que
la MME peut sélectionner une porte située dans le DeNB pour le RN.

9. Système selon la revendication 8, dans lequel le RN comprend un module de sélection et un module de transmission, dans lequel
le module de sélection est configuré pour sélectionner une cellule à rattacher selon une liste de stations de base ou une liste de cellules préconfigurées ou selon une information contenue dans un message de diffusion de système de cellules sur si le rattachement du RN est autorisé ; et
le module de transmission est configuré pour initier un rattachement initial au DeNB auquel la cellule sélectionnée par le module de sélection appartient.

10. Système selon la revendication 8, dans lequel le DeNB comprend un module de réception, un module de sélection et un module de configuration ;
le module de réception est configuré pour recevoir l'information d'indication du RN envoyée depuis le RN ;
le module de sélection est configuré pour sélectionner une MME supportant la fonctionnalité de RN pour le RN selon l'information d'indication du RN reçue par le module de réception ; et
le module de configuration est configuré pour configurer un paramètre dédié de RN pour le RN selon l'information d'indication du RN reçue par le module de réception.
